(19) Europäisches Patentamt
European Patent Office
Office européen des brevets

(11) EP 1 261 481 B1

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **01942596.6**

(22) Anmeldetag: **10.01.2001**

(51) Int Cl.[7]: **B32B 27/36**, C08L 67/02

(86) Internationale Anmeldenummer:
**PCT/EP2001/000211**

(87) Internationale Veröffentlichungsnummer:
**WO 2001/053089 (26.07.2001 Gazette 2001/30)**

(54) **MATTE, UV-STABILE, FLAMMHEMMEND AUSGERÜSTETE KOEXTRUDIERTE POLYESTERFOLIE, VERFAHREN ZU IHRER HERSTELLUNG UND IHRE VERWENDUNG**

MATT, UV-STABLE, FLAME-RETARDANT, CO-EXTRUDED POLYESTER FILM, A METHOD FOR THE PRODUCTION THEREOF AND THE USE OF THE SAME

FEUILLE POLYESTER MATTE, STABLE AUX U.V., IGNIFUGEANTE, COEXTRUDEE, SON PROCEDE DE REALISATION ET SON UTILISATION

(84) Benannte Vertragsstaaten:
**DE FR GB LU NL**

(30) Priorität: **20.01.2000 DE 10002160**

(43) Veröffentlichungstag der Anmeldung:
**04.12.2002 Patentblatt 2002/49**

(73) Patentinhaber: **Mitsubishi Polyester Film GmbH**
**65203 Wiesbaden (DE)**

(72) Erfinder:
- **MURSCHALL, Ursula**
  **55283 Nierstein (DE)**
- **KERN, Ulrich**
  **55218 Ingelheim (DE)**
- **CRASS, Günther**
  **65232 Taunusstein (DE)**
- **HILKERT, Gottfried**
  **55291 Saulheim (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:

| | |
|---|---|
| **EP-A- 0 144 878** | **EP-A- 0 245 207** |
| **EP-A- 0 584 044** | **EP-A- 0 587 148** |
| **EP-A- 0 976 548** | **US-A- 5 073 435** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine biaxial orientierte Polyesterfolie mit einer Basisschicht, die zu mindestens 70 Gew.-% aus einem thermoplastischen Polyester besteht, die mindestens ein UV-Stabilisator und ein Flammschutzmittel enthält und mindestens einer matten Deckschicht, welche eine Mischung bzw. ein Blend aus zwei Komponenten I und II enthält. Die Erfindung betrifft weiterhin ein Verfahren zur Herstellung der Folie und ihre Verwendung.

Die Komponente I der Mischung bzw. des Blends ist ein Polyethylenterephthalat-Homopolymer oder Polyethylenterephthalat-Copolymer oder eine Mischung aus Polyethylenterephthalat Homo- oder Copolymeren.

Die Komponente II der Mischung bzw. des Blends ist ein Polyethylenterephthalat-Copolymer, welches aus dem Kondensationsprodukt der folgenden Monomeren bzw. deren zur Bildung von Polyestern befähigten Derivaten besteht: Isophthalsäure, aliphatische Dicarbonsäure, Suffomonomeres, die eine Metallsulfonatgruppe an dem aromatischen Teil einer aromatischen Dicarbonsäure enthält und aliphatisches oder cycloaliphatisches Glykol.

Die erfindungsgemäße Deckschicht zeichnet sich durch eine charakteristische matte Oberfläche bzw. Optik aus und ist für die Verwendung im Messebau, in Gewächshäusem oder für Anwendungen im industriellen Sektor gut geeignet, wo insbesondere ein UV-Schutz bzw. eine nicht Durchlässigkeit des UV-Lichtes und eine Schwerentflammbarkeit nach DIN 4102 Teil2, Baustoffklasse B2 und B 1 gefordert wird.

Die Industrie hat einen hohen Bedarf an transparenten, hochglänzenden Kunststofffolien, wie z.B. biaxial orientierte Polypropylen-oder biaxial orientierte Polyesterfolien. Daneben besteht in zunehmendem Maße ein Bedarf an solchen transparenten Folien, die nach DIN 4102 schwerentflammbar sind und bei denen zumindest eine Oberflächenschicht nicht hochglänzend ist sondern sich durch ein charakteristisches mattes Erscheinungsbild auszeichnet und dadurch z.B. der Anwendung ein besonderes attraktives und damit werbewirksames Aussehen und einen Schutz vor UV-Strahlung, bei gleichzeitiger Schwerentflammbarkeit, verleiht.

In der **US 4,399,179** wird eine koextrudierte biaxial orientierte Polyesterfolie beschrieben, die aus einer transparenten Basisschicht und mindestens einer matten Schicht besteht, welche im wesentliche aus einem bestimmten Polyethylenterephthalat-Copolymer besteht und zudem innerte Partikel mit einem Durchmesser von 0,3 bis 20 μm in einer Konzentration von 3 bis 40 % enthält. Das spezielle Copolymer ist eine Verarbeitungshilfe, durch die die Viskosität der die innerten Partikeln enthaltenen Schmelze herabgesetzt wird, so dass eine einwandfreie Extrusion dieser Schicht möglich ist. Die Mattheit der Folie wird durch Zugabe der innerten Partikel in die entsprechende Schicht erreicht.

In der **EP 0 144 978** wird eine selbstragende orientierte Folie aus thermoplastischem Kunststoff beschrieben, welche auf wenigstens einer ihrer beiden Oberflächen eine durchgehende Polyesterbeschichtung trägt, die als wässrige Dispersion auf die Folie vor dem letzten Streckschritt aufgebracht wird. Die Polyesterbeschichtung besteht aus einem Kondensationsprodukt von verschiedenen Monomeren, die zur Bildung von Polyestern befähigten Derivaten besteht, wie Isophthalsäure, aliphatische Dicarbonsäure, Sulfomonomere und aliphatischen oder cycloaliphatischen Glykole.

In der **EP-A-0 620 245** sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen.

Ein Vorschlag, wie die UV-Stabilität solcher Folien zu verbessern sei, ist dieser Schrift jedoch nicht zu entnehmen.

In der **DE-A 2346 787** ist ein schwerentflammbarer, phospholanmodifizierter Rohstoff beschrieben. Neben dem Rohstoff ist auch die Verwendung des Rohstoffs zu Folien und Fasern beansprucht. Bei der Herstellung von Folien aus diesem phospholanmodifizierten Rohstoff zeigten sich folgende Defizite:

- Der Rohstoff ist sehr hydrolyseempfindlich und muß sehr gut vorgetrocknet werden. Beim Trocknen des Rohstoffes mit Trocknem, die dem Stand der Technik entsprechen, verklebt der Rohstoff, so dass nur unter schwierigsten Bedingungen eine Folie herstellbar ist.
- Die unter extremen, unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

In den beschriebenen Fällen finden sich keine Hinweise dafür, wie der Folie zumindest auf einer Folienoberfläche ein niedriger Glanz bei einer weiterhin hohen Transparenz der Folie verliehen werden kann und wie die Folie das UV-Licht absorbieren soll und wie der Folie eine hohe UV-Stabilität sowie eine Schwerentflammbarkeit verliehen werden kann.

Aufgabe der vorliegenden Erfindung war es deshalb, eine koextrudierte biaxial orientierte und transparente Polyesterfolie mit mindestens einer matten Deckschicht zur Verfügung zu stellen, die sich einfach und wirtschaftlich herstellen läßt, die die guten physikalischen Eigenschaften der bekannten Folien besitzt, keine Entsorgungsprobleme verursacht und sich insbesondere durch die Absorption des UV-Lichtes und durch eine hohe UV-Stabilität, sowie durch

eine Schwerentflammbarkeit nach DIN 4102 und keine Versprödung nach Temperaturbelastung auszeichnet.

Gelöst wird die Aufgabe durch eine koextrudierte und biaxial orientierte Polyesterfolie der eingangs genannten Gattung, deren kennzeichnende Merkmale darin bestehen, dass die Folie mindestens einen UV-Stabilisator und mindestens ein Flammschutzmittel enthält, wobei das Flammschutzmittel und gegebenenfalls der UV-Stabilisator mittels Masterbatch-Technologie zudosiert werden und eine matte Deckschicht aufweist, die eine Mischung bzw. ein Blend aus zwei Komponenten I und II enthält.

Die Komponente I der Mischung bzw. des Blends ist ein Polyethylenterephthalat-Homopolymer oder Polyethylenterephthalat Copolymer oder eine Mischung aus Polyethylenterephthalat Homo- oder Copolymeren.

Die Komponente II des Copolymers oder der Mischung bzw. des Blends ist ein Polymer, enthaltend mindestens eine Sulfonatgruppe, insbesondere ein Kondensationsprodukt der folgenden Monomeren bzw. deren zur Bildung von Polyestern befähigten Derivaten:

A) 65 bis 95 Mol-% Isophthalsäure;

B) 0 bis 30 Mol-% wenigstens einer aliphatische Dicarbonsäure mit der Formel

$$HOOC(CH_2)_nCOOH$$

wobei

n im Bereich von 1 bis 11 liegt;

C) 5 bis 15 Mol-% wenigstens eines Sulfomonomeren enthaltend eine Alkalimetallsulfonatgruppe an dem aromatischen Teil einer Dicarbonsäure;

D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente II bildenden Monomeren.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendungen nicht vergilben, keine Versprödungen oder Rißbildung der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich durchlässt.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch sich Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit üblichen Industrietrocknern getrocknet werden können. Wesentlich ist, dass die Rohstoffe nicht vergeben und nicht thermisch abgebaut werden. Zu diesen Industrietrocknern nach dem Stand der Technik zählen Vakuumtrockner, Wirbelschichttrockner, Fließbetttrockner und Festbetttrockner (Schachttrockner). Diese Trockner arbeiten bei Temperaturen zwischen 100 und 170 °C, wo herkömmlich flammhemmend ausgerüstete Rohstoffe verkleben und schließlich bergmännisch abgebaut werden müssen, so dass keine Folienherstellung möglich ist. Bei dem am schonensten trocknenden Vakuumtrockner durchläuft der Rohstoff gewöhnlich einen Temperaturbereich von ca. 30 °C bis 130 °C bei einem Unterdruck von 50 mbar. Danach ist ein sog. Nachtrocknen in einem Hopper bei Temperaturen von 100 - 130 °C und einer Verweilzeit von 3 bis 6 Stunden erforderlich. Selbst hier verkleben die bekannten Rohstoffe extrem.

Keine Versprödungen bei kurzer Temperaturbelastung bedeutet, dass die Folie nach 100 Stunden Tempervorgang bei 100 °C in einem Umluftofen keine Versprödung und keine schlechten mechanischen Eigenschaften aufweist.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z. B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften

wie ein homogener Stoff auf und kann entsprechend durch geeignete Parameter charakterisiert werden.

Erfindungsgemäß ist die Folie zumindest zweischichtig. Sie umfaßt dann als Schichten eine Schicht B (=Basisschicht) und die erfindungsgemäße Deckschicht A. In einer bevorzugten Ausführungsform der Erfindung ist die Folie dreischichtig aufgebaut und weist auf der einen Seite der Schicht B (=Basisschicht) die Deckschicht A und auf der anderen Seite der Schicht B eine weitere Schicht C auf. In diesem Fall bilden die beiden Schichten A und C die Deckschichten A und C. Erfindungsgemäß kann der UV-Stabilisator und das Flammschutzmittel in der/den Deckschicht (en) und/oder der Basisschicht enthalten sein.

Die Basisschicht B der Folie besteht bevorzugt zu mindestens 70 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenylx,x'-dicarbonsäuren (insbesondere B iphenyl-4,4'-dicarbonsäure), Diphenylacetylen-x,x'dicarbonsäuren (insbesondere Diphenylacetylen-4,4'-dicarbonsäure) oder Stilben-x, x'dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann z.B. nach dem Umesterungsvertahren erfolgen. Dabei geht man von Dicarbonsäureestem und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Mindestens eine Deckschicht der erfindungsgemäßen Mehrschichtfolie enthält eine im folgenden näher beschriebene Mischung bzw. ein Blend aus zwei Komponenten I und II und gegebenenfalls zugesetzte Additive.

Die Komponente I der Deckschichtmischung bzw. des Blends enthält im wesentlichen einen thermoplastischen Polyester, insbesondere einen solchen Polyester wie er für die Basisschicht näher beschrieben wurde. Für die Erzeugung hoher Mattgrade hat es sich dabei als günstig erwiesen, wenn das Polyesterpolymere für die Komponente I der erfindungsgemäßen Deckschicht eine an sich vergleichsweise geringe Viskosität aufweist. Für die Beschreibung der Viskositäten der Schmelzen wird eine modifizierte Lösungsmittelviskosität (SV-Wert oder "standard viscosity"). Für handelsübliche. Polyethylenterephthalate, die sich zur Herstellung von biaxial orientierten Folien eignen, liegen die SV-Werte im Bereich von 500 bis 1200. Um eine hohe Mattheit der Folie im Sinne der vorliegenden Erfindung zu bekommen, hat es sich als günstig erwiesen, wenn der SV-Wert der Polymeren für die Komponente I der erfindungsgemäßen Deckschicht im Bereich von 500 bis 800, bevorzugt im Bereich von 500 bis 750, insbesondere bevorzugt im Bereich von 500 bis 700 liegen.

Die Komponente II der Deckschichtmischung wird wie bereits angegeben durch Kondensation der folgenden Monomeren bzw. deren zur Bildung von Polymeren befähigten Derivaten erhalten:

A) Isophthalsäure,

B) ggf. einer aliphatischen Dicarbonsäure der Formel

$$HOOC(CH_2)_nCOOH$$

wobei

n im Bereich von 1 bis 11 liegt,

C) einem Sulfomonomeren, enthaltend eine Alkalimetallsulfonatgruppe an dem aromatischen Teil einer aromatischen Dicarbonsäure und

D) der zur Bildung von 100 Mol-% Kondensat notwendigen Menge eines aliphatischen oder cycloaliphatischen Glykols mit 2 bis 11 Kohlenstoffatomen.

Die insgesamt anwesenden Säureäquivalente sollen auf molarer Basis im wesentlichen den insgesamt anwesenden Glykoläquivalenten entsprechen.

Als Komponente B) der Copolyester geeignete Dicarbonsäuren sind z.B. Malon-, Adipin-, Azelain-, Glutar-, Sebacin-, Kork-, Bemstein- und Brassylsäure sowie Mischungen dieser Säuren oder deren zur Bildung von Polyestem befähigte Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure (Komponente C) enthalten, sind solche Monomere, die der folgenden allgemeinen Formel entsprechen:

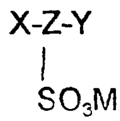

In dieser Formel ist

M ein einwertiges Kation eines Alkalimetalls,

Z ein dreiwertiger aromatischer Rest, und

X und Y sind Carboxylgruppen oder Polyester bildende Äquivalente.

Monomere dieserArtsind in den US-A 3,563,942 und 3,779,993 beschrieben. Beispiele solcher Monom eren sind Natrium-sulfoterephthalsäure, Natrium-5-sulfoisophthalsäure, Natrium-sulfophthalsäure, 5-(p-Natriumsulfphenoxy)-isophthalsäure, 5-(Natriumsulfopropoxy)-isophthalsäure und dergleichen Monomere sowie deren zur Bildung von Polyestern befähigte Derivate, wie z.B. die Dimethylester. M ist vorzugsweise $Na^+$, $Li^+$ oder $K^+$.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Diethylterephthalat und zahlreiche andere Ester, Halogenide oder Salze. Bevorzugt werden die Säuremonomeren als Dimethylester verwendet, da auf diese Weise die Kondensationsreaktion besser gesteuert werden kann.

Als Komponente D) geeignete Glykole sind z.B. Ethylenglykol, 1,5-Pentadiol, 1,6-Hexandiol, Neopentylglykol, 1,10-Decandiol, cyclohexan-dimethanol und ähnliche Substanzen. Bevorzugt wird Ethylenglykol verwendet.

Die Copolyester können durch bekannte Polymerisationstechniken hergestellt werden. Im allgemeinen wird so verfahren, dass die Säurekomponenten mit Glykol zusammengebracht und in Anwesenheit eines Veresterungskatalysators erhitzt werden, mit anschließender Zugabe eines Polykondensationskatalysators.

Es hat sich gezeigt, dass die verhältnismäßige Anteile der Komponenten A, B, C und D, die zur Herstellung der erfindungsmäßigen Mischungen eingesetzt werden, entscheidend für das Erzielen der matten Deckschicht sind. So muß z. B. Isophthalsäure (Komponente A) zu mindestens etwa 65 Mol-% als Säurekomponente anwesend sein. Bevorzugt ist die Komponente A als reine Isophthalsäure, die in einer Menge von etwa 70 bis 95 Mol-% anwesend ist.

Für die Komponente B gilt, dass jede Säure mit der genannten Formel zufriedenstellende Ergebnisse bringt, wobei Adipinsäure, Azelainsäure, Sebacinsäure, Malonsäure, Bemsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten der Mischung II, wenn die Komponente B in der Zusammensetzung enthalten ist.

Die Glykolkomponente ist in stöchiometrischer Menge anwesend.

Die für die Zwecke der Erfindung geeigneten Copolyester zeichnen sich weiterhin dadurch aus, dass sie eine Säurezahl unter 10 , vorzugsweise von 0 bis 3, ein mittleres Mol-Gewicht unter etwa 50.000 und einen SV-Wert im Bereich von etwa 30 bis 700, vorzugsweise etwa 350 bis 650, aufweisen.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise zwischen I:II = 20:80 bis I:II = 95:5 und insbesondere zwischen I:II =30:70 bis I:II =95:5.

Die Folie enthält erfindungsgemäß einen UV-Stabilisator und ein Flammschutzmittel. Der UV-Stabilisator wird zweckmäßigerweise über die sogenannte Masterbatch-Technologie direkt bei der Folienherstellung zudosiert wird, wobei die Konzentration des UV-Stabilisators vorzugsweise zwischen 0,01 Gew.-% und 5 Gew.-% bezogen auf das

Gewicht der Schicht des kristallisierbaren Thermoplasten liegt.

Das Flammschutzmittels wird ebenfalls erfindungsgemäß über die sogenannte Masterbatch-Technologie direkt bei der Folienherstellung zudosiert, wobei die Konzentration zwischen 0,5 und 30 Gew.-%, vorzugsweise zwischen 1 und 20 Gew.-%, bezogen auf das Gewicht der Schicht des kristallisierbaren Thermoplasten, liegt.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vemetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind organische Phosphorverbindungen wie Carboxyphosphinsäuren und deren Anhydride. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali-/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

In einer ganz besonders bevorzugten Ausführungsform enthält die erfindungsgemäße, Folie neben 1 Gew.-% bis 20 Gew.-% eines Flammschutzmittels, 0,01 Gew.-% bis 5,0 Gew.-% 2-(4,6-Diphenyl-1,3,5-triazin-2-yl)-5-(hexyl) oxy-phenol der Formel

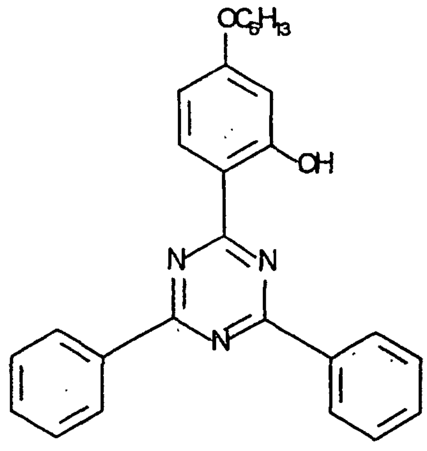

oder 0,01 Gew.-% bis 5,0 Gew.-% 2,2-Methylen-bis(6-(2H-benzotriazol-2-yl)-4-(1,1,2,2-tetramethylpropyl)-phenol der Formel

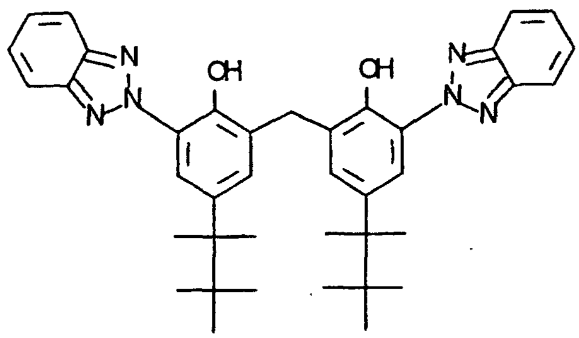

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt erden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat; liegt.

Die Basisschicht und/oder die Deckschicht(en) können neben dem UV-Stabilisator und dem über Masterbatch-Technologie zudosierten Flammschutzmittel zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerteilchen wie Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 10 Gew.-% erwiesen. Durch die Zugabe von diesen Partikeln in die Deckschicht hat man eine weitere vorteilhafte Möglichkeit, den Mattgrad der Folie zu variieren. Mit der Zunahme der Pigmentkonzentration ist in der Regel auch eine Zunahme des Mattgrades der Folie verbunden. Eine detaillierte Beschreibung der Antiblockmittel findet sich beispielsweise in der EP A 0 602 964.

Gegenstand der vorliegenden Erfindung ist auch ein Verfahren zur Herstellung dieser Folie. Es umfaßt das

a) Herstellen einer Folie aus Basis- und Deckschicht(en) durch Koextrusion,
b) biaxiale Verstrecken der Folie und

c) Thermofixieren der verstreckten Folie.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt.

Während der ca. 6-stündigen, vorzugsweise 5-stündigen, insbesondere 4-stündigen Verweilzeit wird die Rohstoffmischung m it 10 bis 70 Upm, vorzugsweise 15 bis 65 Upm, insbesondere 20 bis 60 Upm gerührt. Das so vorkristallisierte bzw. vorgetrocknete Rohstoffgem isch wird in einem nachgeschalteten ebenfalls evakuierten Behälter bei 90 ° bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Zur Herstellung der erfindungsgemäßen Deckschicht werden zweckmäßig Granulate aus der Mischungskomponente I und Granulate aus der Mischungskomponente II im gewünschten Mischungsverhältnis sowie gegebenenfalls das Flammschutz-Masterbatch, welches vorgetrocknet ist, direkt dem Extruder zugeführt. Es hat sich als zweckmäßig erwiesen, für die Extrusion der erfindungsgemäßen matten Deckschicht einen Zweischneckenextruder zu verwenden, wie er z.B. in der EP 0 826 478 beschrieben ist. Die Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich weitere Copolymere aus den Homopolymeren und den Copolymeren bilden können.

Die Polymere für die Basisschicht sowie das Flammschutz-Masterbatch, welches vorgetrocknet ist, werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d. h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die Folie kann weiterhin auf mindestens einer ihrer Oberflächen beschichtet werden, so dass die Beschichtung auf der fertigen Folie eine Dicke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion bspw. wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die eine zusätzliche Funktionalität verleihen sind:

Acrylate, wie sie bspw. beschrieben sind in der WO 94/13476, Ethylvinylalkohole, PVDC, Wasserglas ($Na_2SiO_4$), hydrophilische Polyester(5-Na-sulfoisophthatsäurehaltige PET/IPA Polyester wie sie bspw. beschrieben sind in der EP-A-0 144 878, US-A-4,252,885 oder EP-A-0 296 620, Vinylacetate wie sie bspw. beschrieben sind in der WO 94/13481, Polyvinylacetate, Polyurethane, Alkali- oder Erdalkalisalze von $C_{10}$-$C_{18}$-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wässrige Lösung, Emulsion oder Dispersion auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann die zuvor erwähnten gewünschten Schichtdicken.

Des Weiteren können die Folien - vorzugsweise in einem Off-Line-Verfahren mit Metallen wie Aluminium oder keramischen Materialien wie $SiO_x$ oder $Al_xO_y$ beschichtet werden. Dies verbessert insbesondere ihre Gasbarriereeigenschaften.

Die erfindungsgemäße Polyesterfolie enthält vorzugsweise noch eine zweite Deckschicht C. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere, den UV-Stabilisator, das Flammschutzmittel oder Polymermischungen für die Basis- oder die erfindungsgemäße erste Deckschicht enthalten kann, welche aber nicht mit den der ersten Deckschicht identisch sein müssen. Die zweite Deckschicht kann auch andere gängige Deckschichtpolymere enthalten, die auch mit UV-Stabilisator und/oder das Flammschutzmittel ausgerüstet sein können.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive sowie das Flammschutzmittel und/oder den UV-Stabilisator enthalten. Die Dicke der Zwischenschicht ist im allgemeinen größer als 0,3 μm und liegt vorzugsweise im Bereich von 0,5 bis 15 μm, insbesondere 1,0 bis 10 μm.

Die Dicke der Deckschicht(en) ist im allgemeinen größer als 0,1 μm und liegt vorzugsweise im Bereich von 0,2 bis 5 μm, insbesondere 0,2 bis 4 μm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 500 μm, insbesondere 5 bis 450 μm, vorzugsweise 6 bis 300 μm, wobei die Basisschicht einen Anteil von vorzugsweise etwa 40 bis 90 % an der Gesamtdicke hat.

Es ist völlig überraschend, dass der Einsatz der obengenannten UV-Stabilisatoren in Folien zu dem gewünschten Ergebnis führte. Der Fachmann hätte vermutlich zunächst versucht, eine UV-Stabilität über ein Antioxidanz zu erreichen, hätte jedoch bei Bewitterung festgestellt, dass die Folie schnell gelb wird.

Beim Einsatz von herkömmlichen UV-Stabilisatoren hätte er feststellen müssen, dass

- der UV-Stabilisator eine mangelnde thermische Stabilität, hat und sich bei Temperaturen zwischen 200 °C und 240 °C zersetzt und ausgast
- er große Mengen (ca. 10 bis 15 Gew.-%) UV-Stabilisator einarbeiten mußte, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbzahlunterschieden (YID) um die 25. Des Weiteren hätte er festgestellt, dass die mechanischen Eigenschaften negativ beeinflusst werden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigung der optischen Eigenschaften (Schlechte Trübung, Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des erfindungsgemäßen UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Es war weiterhin überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Des Weiteren ist sehr überraschend, dass auch das aus den Folien erzeugte Rezyklat (Regenerat) wieder einsetzbar ist, ohne den Gelbwert der Folie negativ zu beeinflussen.

Die erfindungsgemäße Folie ist ohne Umweltbelastung problemlos rezyklierbar, wodurch sie sich beispielsweise fürdie Verwendung als kurzlebige Werbeschilder, beim Messebau und für andere kurzlebige Werbeartikel, wo Brandschutz und UV-Absorption gewünscht wird, eignet.

Ein weiterer Vorteil besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass das Regenerat in einem Anteil von bis zu 50 Gew.-%, bevorzugt 10 bis 50 Gew.-%, jeweils bezogen auf das Gesamtgewicht der Folie, wiederverwendet werden kann, ohne dass dabei die physikalischen Eigenschaften der Folie nennenswert negativ beeinflusst werden.

Zusammengefasst zeichnet sich die erfindungsgemäße Folie durch die Schwerentflammbarkeit nach DIN 4102 (Baustoffklasse B1 und B2), eine UV-Licht-Undurchlässigkeit, eine hohe UV-Stabilität, einen niedrigen Glanz, insbesondere einen niedrigen Glanz der Folienoberfläche A, und durch eine vergleichsweise niedrige Trübung aus. Außerdem besitzt sie ein gutes Wickel- und Verarbeitungsverhalten. Weiterhin ist erwähnenswert, dass die erfindungsgemäße Deckschicht gut mit Kugelschreiber, Filzstift oder Füllfeder beschriftbar ist.

Der Glanz der Folienoberfläche A ist niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter.

Daneben erfüllt die Folie die Baustoffklassen B1 und B2 nach DIN 4102 Teil 1 und Teil 2 und zeigt keine Versprödung bei Temperaturbelastung. Im Vergleich zu einer Standardfolie ist der Gelbwert (YID) der erfindungsgemäßen Folie nicht erhöht. Die Folie läßt erst Licht bzw. Strahlung von > 360 nm durch, d. h. die Folie absorbiert die schädliche UV-Strahlung. Eine nicht UV-stabilisierte Folie läßt bereits Strahlung ab 280 nm durch, d h. das UV-Licht im Wellenlängenbereich von 280 bis 360 nm wird nicht absorbiert sondern von der Folie durchgelassen.

Die Trübung der erfindungsgemäßen Folie ist kleiner als 40 %. In einer bevorzugten Ausführungsform beträgt die Trübung der Folie weniger als 35 % und in einer besonders bevorzugten Ausführungsform weniger als 30 %. Durch die vergleichsweise geringe Trübung der Folie (verglichen mit einer matten Monofolie, siehe Vergleichsbeispiel) kann die Folie z.B. im Konterdruck bedruckt werden oder es können Sichtfenster eingebaut werden, durch die z.B. das Füllgut sehr gut zu erkennen ist.

Durch die Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Weitere Anwendungsgebiete sind die Verwendung zur Herstellung von Etiketten (Labels), als Trennfolie oder als Prägefolie oder In-Mold-Labelling.

Die nachstehende Tabelle (Tabelle 1) fasst die wichtigsten erfindungsgemäßen Folieneigenschaften noch einmal zusammen.

Tabelle 1

| | erfindungsgemäßer Bereich | bevorzugt | besonders bevorzugt | Einheit | Meßmethode |
|---|---|---|---|---|---|
| Glanz, Seite A (Messwinkel 60) | < 70 | < 60 | < 50 | | DIN 67 530 |
| Trübung | < 40 | < 35 | < 30 | % | ASTM-D |
| Reibungskoeffizient: | | | | | DIN 53 375 |
| A-Seite gegen sich selbst C- bzw. | < 0,6 | <0,55 | < 0,50 | | |
| B-Seite gegen sich selbst | < 0,5 | <0,55 | < 0,55 | | |

Tabelle 1 (fortgesetzt)

| | erfindungsgemäßer Bereich | bevorzugt | besonders bevorzugt | Einheit | Meßmethode |
|---|---|---|---|---|---|
| mittiere Rauigkeit R, (A-Seite) | 200 - 600 | 230 - 550 | 250 - 530 | nm | DIN 4768, bei einem Cut-off von 0,25 nm |
| Gelbwert (YID) | < 30 | <20 | <10 | | DIN-6167 |
| Hohe UV-Stabilität | | | | | |
| UV-Licht-Durchlässigkeit ab Wellenlänge | > 350 | > 360 | > 370 | nm | |
| Baustoffklasse nach DIN 4102 Teil 2 und Tell 1 | erfülit B 2<br>erfüllt B 1 | | | | |

Zur Charakterisierung der Rohstoffe und der Folien wurden die folgenden Methoden benutzt:

**Meßmethoden**

DIN = Deutsches Institut für Normung
ISO = International Organization for Standardization
ASTM = American Society for Testing and Materials

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV (DCE) = 6{,}67 \cdot 10^{-4} SV (DCE) + 0{,}118$$

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mit der sogenannten Tintenmethode (DIN 53 364) bestimmt.

**Trübung**

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als

proportionale elektrische Größe angezeigt. Der Messwert ist dimensionslos und muß mit dem Einstrahlwinkel angegeben werden.

**Rauigkeit**

Die Rauigkeit $R_a$ der Folie wurde nach DIN 4768 bei einem Cut-off von 0,25 mm bestimmt.

**Mechanische Eigenschaften**

Der E-Modul und die Reißfestigkeit und die Reißdehnung werden in Längs- und Querrichtung nach ISO 527-1-2 gemessen.

**Bewitterung (beidseitig), UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 $W/m^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

Numerische Werte von < 0,3 sind vemachlässigbar und bedeuten, dass keine signifikante Farbänderung vorliegt.

**Gelbwert**

Der Gelbwert (YID) ist die Abweichung von der Farblosigkeit in Richtung "Gelb" und wird gemäß DIN 6167 gemessen. Gelbwerte (YID) von < 5 sind nicht sichtbar.

Bei nachstehenden Beispielen und Vergleichsbeispielen handelt es sich jeweils um transparente Folien unterschiedlicher Dicke, die auf der beschriebenen Extrusionsstraße hergestellt werden.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.

Die folgenden Beispiele illustrieren die Erfindung.

**Beispiel 1**

a) Zubereitung der Komponente II für die erfindungsgemäße Deckschichtmischung Ein Copolyester mit ca. 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:

Ein 2 l fassender Reaktionsbehälter aus Edelstahl, der mit einem Ankerrührer, einem Thermoelement zur Messung der Temperatur des Gefäßinhalts, einer 18 Zoll-Claisen/Vigreux-Destillationskolonne mit Kühler und Vorlage, einer Einlassöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer ($Na_2CO_3$ 10 $H_2O$ - 0,439 g) und ein Umesterungskatalysator ($(Mn(OAc)_2$ 4 $H_2O$ - 0,563 g) in ein Gefäß gegeben. Das Gemisch wurde unter Rühren erhitzt, wobei Methanol ab destillierte. Während der Destillation wurde die Gefäßtemperatur allmählich auf 250°C erhöht. Als das Gewicht des Destillates der theoretischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktiongemisch wurden 20 g reines Ethylencarbonat zugegeben, und sofort setzte eine

heftige Gasentwicklung ($CO_2$) ein. Die $CO_2$-Entwicklung ließ nach etwa 10 min nach. Es wurde dann ein Unterdruck von 240 mm Hg gezogen und der Polykondensationskatalysator (0,563 g $Sb_2O_3$ in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck auf höchstens 0,1 mm Hg gesenkt. Zu diesem Zeitpunkt wurde eine Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2, 3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.

B) Mischungsherstellung für die erfindungsgemäße Deckschicht A

Es wurden 75 Gew.-% der Komponente I (Polyethylenterephthalat mit einem SV-Wert von 680) mit 15 Gew.-% der Komponente II und 10 Gew.-% eines Masterbatches, welches den UV-Stabilisator enthält dem Einfülltrichter eines Zweischneckenextruders zugeführt und beide Komponenten zusammen bei ca. 300 °C extrudiert und dem Deckschichtkanal A einer Mehrschichtdüse zugeführt.

Das Masterbatch setzt sich aus 5 Gew.-% 2-(4,6-Diphenyl-1,3,5-triazin-2-yl)-5-(hexyl)-oxyphenol (® TINUVIN 1577) als UV-Stabilisator und 95 Gew.-% Polyester zusammen.

Basisschicht B:

Das vorgetrocknete Flammschutzmittel wird in Form eines Masterbatches in die Basisschicht dosiert. Das Flammschutz-Masterbatch setzt sich aus 20 Gew.-% Flammschutzmittel und 80 Gew.-% Polyester zusammen

Bei dem Flammschutzmittel handelt es sich um die organische, im Polyester lösliche Phosphorverbindung® Amgard P1045 der Fa. Albright & Wilson.

Die Basisschicht hat folgende Zusammensetzung:

| | |
|---|---|
| 75 Gew.-% | Polyethylenterephthalat (RT49 von Hoechst AG) mit einem SV-Wert von 800 und |
| 5 Gew.-% | Masterbatch aus 99 Gew.-% Polyethylenterephthalat und 1,0 Gew.-% Kieselsäurepartikel (® Sylobloc 44 H der Firma Grace) mit einer mittleren Teilchengröße von 4,5 µm |
| 20 Gew.-% | des Flammschutz-Masterbatches. |

Die Komponenten der Basisschicht werden bei Raumtemperatur aus separaten Dosierbehältern in einem Vakuumtrockner gefüllt, der vor dem Einfüllzeitpunkt bis zum Ende der Verweilzeit ein Temperaturspektrum von 25 °C bis 130 °C durchläuft. Während der 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 Stunden nachgetrocknet und dem Extruder für die Basisschicht zugeführt.

Deckschichten A und C:

Ebenfalls wurden Chips aus Polyethylenterephthalat und einem Füllstoff dem Extruder für die Deckschicht C zugeführt. Durch Koextrusion und anschließende stufenweise Orientierung in Längs- und Querrichtung wurde dann eine transparente dreischichtige Folie mit ABC-Aufbau und einer Gesamtdicke von 12 µm hergestellt. Die Deckschichten hatten ein Dicke von jeweils 1,5 µm.

| Deckschicht A: | |
|---|---|
| 75 Gew.-% | Komponente I |
| 15 Gew.-% | Komponente II und |
| 10 Gew.-% | UV-Masterbatch (5 Gew.-% ® TINUVIN 1577, 95 Gew.-% Polyester) |

| Deckschicht C | |
|---|---|
| 80 Gew.-% | Polyethylenterephthalat (RT49 von Hoechst AG) mit einem SV-Wert von 800 und |

(fortgesetzt)

| Deckschicht C | |
|---|---|
| 10 Gew.-% | Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm. |
| 10 Gew.-% | UV-Masterbatch (5 Gew.-% ® TINUVIN 1577, 95 Gew.-% Polyester) |

Die einzelnen Verfahrensschritte waren:

| | | |
|---|---|---|
| Längsstreckung | Temperatur | 85-135 °C |
| | Längsstreckverhältnis | 4,0 : 1 |
| Querstreckung | Temperatur | 85-135 °C |
| | Querstreckverhältnis | 4,0 : 1 |
| Fixierung | Temperatur | 230 °C |

**Beispiel 2**

Analog zu Beispiel 1 wurde durch Koextrusion eine dreischichtige Folie mit einer Gesamtdicke von 12 µm hergestellt. Es wurde nur die Zusammensetzung der Deckschicht A geändert:

| Deckschicht A: | |
|---|---|
| 70 Gew.-% | Komponente I |
| 20 Gew.-% | Komponente II und |
| 10 Gew.-% | UV-Masterbatch. |

**Beispiel 3**

Eine koextrudierte Folie mit der Rezeptur gemäß Beispiel 1, bei der die Deckschicht A wie folgt zusammengesetzt war:

| | |
|---|---|
| 65 Gew.-% | Komponente I |
| 25 Gew.-% | Komponente II und |
| 10 Gew.-% | UV-Masterbatch. |

**Beispiel 4**

Eine koextrudierte Folie mit der Rezeptur gemäß Beispiel 1, bei der die Deckschicht A wie folgt zusammengesetzt war:

| | |
|---|---|
| 55 Gew.-% | Komponente I |
| 35 Gew.-% | Komponente II und |
| 10 Gew.-% | UV-Masterbatch |

**Vergleichsbeispiel**

Es wurde eine Monofolie hergestellt, die wie die Deckschicht A aus Beispiel 3 zusammengesetzt war. Die Folienoberflächen hatten die geforderte Mattheit, die Folie entsprach jedoch nicht den gestellten Anforderungen, weil sie zu trüb war. Außerdem war es sehr schwer, die Folie verfahrenssicher und daher wirtschaftlich herzustellen.

Des Weiteren ist die Folie nicht UV-stabil und läßt das schädliche UV-Licht durch. Nach 1000 Stunden Bewitterung zeigt die Folie Risse und Versprödungserscheinungen sowie eine sichtbare Gelbfärbung. Die Folie erfüllt nicht die Baustoffklassen B1 und B 2.

Tabelle 2

| Beispiel Nr | Erfüllt nach DIN 4102 die Baustoff-klassen | Foliendicke (µm) | Deckschichtdicke A/C (µm) | Folienaufbau | Glanz (60° Messwinkel) | | Trübung (%) | Strahlendurchlässigkeit (nm) |
|---|---|---|---|---|---|---|---|---|
| | | | | | A-Seite | C-Seite | | |
| 1 | B1 und B 2 | 12 | 1,5/1,5 | ABC | 65 | 175 | 25 | >360 |
| 2 | B1 und B 2 | 12 | 1,5/1,5 | ABC | 55 | [illegible] | | >360 |
| 3 | B1 und B 2 | 12 | 1,5/1,5 | ABC | 45 | 175 | 28 | >360 |
| 4 | B1 und B 2 | 12 | 1,5/1,5 | ABC | 35 | 175 | 30 | >360 |
| VB | | 12 | | A | 35 | 160 | 70 | >280 |

Nach 1000 Stunden Bewitterung mit dem Atlas CI 65 Weather Ometer zeigen die Folien aus den Beispielen 1 - 4 keinerlei Versprödungen, keine Risse und Gelbwerte von < 10.

**Patentansprüche**

1. Koextrudierte, biaxial orientierte Polyesterfolie, bestehend aus einer Basisschicht und mindestens einer Deckschicht, wobei die Folie mindestens eine in Thermoplasten lösliche, organische Phosphorverbindung als Flammschutzmittel und mindestens einen UV-Stabilisator enthält und eine matte Deckschicht aufweist, die eine Mischung und/oder ein Blend aus zwei Komponenten I und II enthält, wobei die Komponente I im wesentlichen ein Polyethylenterephthalat-Homopolymer oder Polyethylenterephthalat Copolymer oder eine Mischung aus Polyethylenterephthalat-Homopolymer oder Polyethylenterephthalat Copolymeren ist und die Komponente II ein Polymer ist, welches ein Kondensationsprodukt der folgenden Monomere und/oder deren zur Bildung von Polymeren befähigten Derivaten ist:

   A) 65 bis 95 Mol-% Isophthalsäure;
   B) 0 bis 30 Mol-% wenigstens einer aliphatische Dicarbonsäure mit der Formel

   $$HOOC(CH_2)_nCOOH$$

   wobei
   n im Bereich von 1 bis 11 liegt;
   C) 5 bis 15 Mol-% wenigstens eines Sulfomonomeren enthaltend eine Alkalimetall-sulfonatgruppe an dem aromatischen Teil einer Dicarbonsäure;
   D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

   wobei die Prozentangaben jeweils bezogen sind auf die Gesamtmenge der die Komponente II bildenden Monomeren.

2. Folie nach Anspruch 1, **dadurch gekennzeichnet, dass** das Verhältnis der Komponenten I und II im Bereich von I:II = 10:90 bis I:II 95:5 liegt.

3. Folie nach Anspruch 1 oder 2 **dadurch gekennzeichnet, dass** der UV-Stabilisator ausgewählt ist aus 2-Hydroxybenzotriazolen, Triazinen und Mischungen aus diesen.

4. Folie nach oder mehreren der Ansprüche 1 bis 3, **dadurch gekennzeichnet, dass** die Konzentration des Flammschutzmittels im Bereich von 0,5 bis 30,0 Gew.-%, vorzugsweise von 1,0 bis 20,0 Gew.-%, bezogen auf das Gewicht des kristallisierbaren Thermoplasten, liegt.

5. Folie nach einem oder mehreren der Ansprüche 1 bis 4, **dadurch gekennzeichnet, dass** das Flammschutzmittel organische Phosphorverbindungen, vorzugsweise Carboxyphosphinsäuren und deren Anhydride enthält.

6. Folie nach einem oder mehreren der Ansprüche 1 bis 5, **dadurch gekennzeichnet, dass** ein Hydrolysestabilisator in Form von phenolischen Stabilisatoren, Alkali-/Erdalkalistearaten und/oder Alkali-/Erdalkalicarbonaten in einer Menge von 0,01 bis 1,0 Gew.-%, vorzugsweise phenolische Stabilisatoren in einer Menge von 0,05 bis 0,6 Gew.-%, insbesondere 0,15 bis 0,3 Gew.-% und mit einer Molmasse von mehr als 500 g/mol, enthalten ist.

7. Folie nach Anspruch 6, **dadurch gekennzeichnet, dass** der Hydrolysestabilisator Pentaerythrityl-Tetrakis-3-(3,5-di-Tertiärbutyl-4-Hydroxyphenyl)-Propionat und/oder 1,3,5-Trimethyl-2,4,6-tris(3,5-di-Tertärbutyl-4-Hydroxybenzyl)benzol ist.

8. Folie nach einem oder mehreren der Ansprüche 1 bis 7, **dadurch gekennzeichnet, dass** die Deckschicht eine Dicke von 0,2 bis 6 µm, aufweist.

9. Folie nach einem oder mehreren der Ansprüche 1 bis 8, **dadurch gekennzeichnet, dass** sie zweischichtig ist und aus der Basisschicht und der Deckschicht besteht.

10. Folie nach einem oder mehreren der Ansprüche 1 bis 9, **dadurch gekennzeichnet, dass** sie dreischichtig ist und aus der Basisschicht und je einer Deckschicht auf beiden Seiten der Basisschicht besteht.

11. Folie nach Anspruch 9 oder 10, **dadurch gekennzeichnet, dass** eine Deckschicht einen anorganischen Füllstoff enthält.

12. Folie nach einem oder mehreren der Ansprüche 1 bis 13, **dadurch gekennzeichnet, dass** sie auf mindestens einer Oberfläche metallisiert oder mit $SiO_x$, $Al_xO_y$, Ethylvinylalkohol, PVDC, Wasserglas, hydrophilischern Polyester, Vinylacetat, Polyvinylacetat, Polyurethan, Alkali-oder Erdalkali-Fettsäuresalze, Butadiencopolymer, (Meth) acrylsäure oder deren Ester oder Silikon beschichtet ist.

13. Verfahren zur Herstellung der Folie nach Anspruch 1, bei dem Polyesterschmelzen entsprechend den Zusammensetzungen der Deck- und Basisschichten einer Mehrschichtdüse zugeführt werden, aus der Düse auf eine Abkühlwalze extrudiert werden und die so erhaltene Vorfolie anschließend biaxial verstreckt und hitzefixiert wird, wobei die Polyesterschmelze(n) für die Basisschicht und/oderfür die Deckschicht(en) mindestens einen UV-Stabilisator und/oder mindestens ein Flammschutzmittel enthalten und die Polyesterschmelze für die Deckschicht(en) eine Mischung und/oder ein Blend aus zwei Komponenten I und II enthält, wobei die Komponente I ein Polyethylenterephthalat-Homopolymeroder Polyethylenterephthalat Copolymer oder eine Mischung aus Polyethylenterephthalat Homo- oder Copolymeren ist und die Komponente II ein Polymer ist, welches mindesten eine Sulfonatgruppe enthält.

14. Verwendung einer Folie nach einem oder mehreren der Ansprüche 1 bis 12 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

15. Verwendung der Folie nach einem oder mehreren der Ansprüche 1 bis 12 als bedruckbare Folie.

16. Verwendung der Folie nach einem oder mehreren der Ansprüche 1 bis 12 als Label.

17. Verwendung der Folie nach einem oder mehreren der Ansprüche 1 bis 12 als Trennfolie zur Herstellung von GFK-Halbzeugen.

18. Verwendung der Folie nach einem oder mehreren der Ansprüche 1 bis 12 als Prägefolie.

19. Verwendung der Folie nach einem oder mehreren der Ansprüche 1 bis 12 als In-Mold-Label.

## Claims

1. A coextruded, biaxially oriented polyester film composed of a base layer and of at least one outer layer, where the film comprises, as flame retardant, at least one organic phosphorus compound soluble in thermoplastics, and comprises at least one UV stabilizer and has a matt outer layer which comprises a mixture and/or a blend made from two components I and II, where component I is essentially a polyethylene terephthalate homopolymer or polyethylene terephthalate copolymer or a mixture made from polyethylene terephthalate homopolymer or from polyethylene terephthalate copolymers, and component II is a polymer which is a condensation product of the following monomers and/or of their derivatives capable of forming polymers:

   A) from 65 to 95 mol% of isophthalic acid,
   B) from 0 to 30 mol% of at least one aliphatic dicarboxylic acid with the formula

$$HOOC(CH_2)_nCOOH$$

   where
   n is from 1 to 11;
   C) from 5 to 15 mol% of at least one sulfomonomer containing an alkali metal sulfonate group on the aromatic moiety of a dicarboxylic acid;
   D) a copolymerizable aliphatic or cycloaliphatic glycol having from 2 to 11 carbon atoms, in the stoichiometric amount necessary to form 100 mol% of condensate;

   where each of the percentages given is based on the total amount of the monomers forming component II.

2. The film as claimed in claim 1, wherein the ratio of components I and II is in the range from I:II = 10:90 to I:II = 95:5.

3. The film as claimed in claim 1 or 2, wherein the UV stabilizer has been selected from the group consisting of 2-hydroxybenzotriazoles, triazines and mixtures of these.

4. The film as claimed in one or more of claims 1 to 3, wherein the concentration of the flame retardant is from 0.5 to 30.0% by weight, preferably from 1.0 to 20.0% by weight, based on the weight of the crystallizable thermoplastic.

5. The film as claimed in one or more of claims 1 to 4, wherein the flame retardant comprises organophosphorus compounds, preferably carboxyphosphinic acids, or anhydrides of these.

6. The film as claimed in one or more of claims 1 to 5, wherein a hydrolysis stabilizer is present in the form of phenolic stabilizers or of alkali metal/alkaline earth metal stearates and/or of alkali metal/alkaline earth metal carbonates in amounts of from 0.01 to 1.0% by weight, preferably phenolic stabilizers in amounts of from 0.05 to 0.6% by weight, in particular from 0.15 to 0.3% by weight, and with a molar mass above 500 g/mol.

7. The film as claimed in claim 6, wherein the hydrolysis stabilizer is pentaerythrityl tetrakis-3-(3,5-di-tert-butyl-4-hydroxyphenyl)propionate and/or 1,3,5-trimethyl-2,4,6-tris(3,5-di-tert-butyl-4-hydroxybenzyl)benzene.

8. The film as claimed in one or more of claims 1 to 7, wherein the outer layer has a thickness of from 0.2 to 6 $\mu$m.

9. The film as claimed in one or more of claims 1 to 8, wherein the film has two layers and is composed of the base layer and of the outer layer.

10. The film as claimed in one or more of claims 1 to 9, wherein the film has three layers and is composed of the base layer and of an outer layer on each side of the base layer.

11. The film as claimed in claim 9 or 10, wherein an outer layer comprises an inorganic filler.

12. The film as claimed in one or more of claims 1 to 11, wherein at least one surface of the film has been metallized or has been coated with $SiO_x$, $Al_xO_y$, ethyl -vinyl alcohol, PVDC, waterglass, hydrophilic polyester, vinyl acetate, polyvinyl acetate, polyurethane, fatty acid salts of alkali metals or of alkaline earth metals, butadiene copolymer, (meth)acrylic acid or esters thereof, or silicone.

13. A process for producing the film as claimed in claim 1, in which polyester melts corresponding to the compositions of the outer and base layers are fed to a coextrusion die, and extruded from the die onto a chill roll, and the resultant prefilm is then biaxially oriented and heat-set, where the polyester melt(s) for the base layer and/or for the outer layer(s) comprise(s) at least one UV stabilizer and/or at least one flame retardant, and the polyester melt for the outer layer(s) comprises a mixture and/or a blend made from two components I and II, where component I is a polyethylene terephthalate homopolymer or polyethylene terephthalate copolymer or a mixture made from polyethylene terephthalate homo- or copolymers and component II is a polymer which contains at least one sulfonate group.

14. The use of the film as claimed in one or more of claims 1 to 12 as interior decoration, as display, for placards, for protective glazing, in the lighting sector, in the fitting out of shops or of stores, as a promotional requisite or laminating medium, for greenhouses, roofing systems, exterior cladding, protective coverings, in the construction sector, as an illuminated advertising profile, a blind, or in electrical applications.

15. The use of the film as claimed in one or more of claims 1 to 12 as a printable film.

16. The use of the film as claimed in one or more of claims 1 to 12 as a label.

17. The use of the film as claimed in one or more of claims 1 to 12 as a release film for producing glass-fiber-reinforced semifinished products.

18. The use of the film as claimed in one or more of claims 1 to 12 as a hot-stamping foil.

19. The use of the film as claimed in one or more of claims 1 to 12 as an in-mold label.

**Revendications**

1. Feuille polyester orientée biaxialement, coextrudée, constituée d'une couche de base et d'au moins une couche de recouvrement, ladite feuille contenant au moins un composé phosphoré organique soluble dans les thermoplastiques à titre d'agent ignifugeant et au moins un stabilisateur U.V. et ladite feuille présentant une couche de recouvrement mate, qui comprend un mélange et/ou un blend de deux composants I et II, le composant I étant pour l'essentiel un homopolymère de polyéthylène téréphtalate ou un copolymère de polyéthylène téréphtalate ou un mélange d'homopolymères de polyéthylène téréphtalate ou de copolymères de polyéthylène téréphtalate et le composant II étant un polymère qui est un produit de condensation des monomères suivant et/ou de leurs dérivés polymérisables :

   A) 65 à 95 % en moles d'acide isophtalique ;
   B) 0 à 30 % en moles d'au moins un diacide carboxylique aliphatique de formule :

$$HOOC(CH_2)_nCOOH$$

   dans laquelle
   n se situe dans la plage allant de 1 à 11 ;
   C) 5 à 15 % en moles d'au moins un sulfomonomère contenant un groupe sulfonate de métal alcalin sur la partie aromatique d'un diacide carboxylique ;
   D) la quantité stoechiométrique nécessaire à la formation de 100 % en moles de produit de condensation d'un glycol aliphatique ou cycloaliphatique copolymérisable ayant de 2 à 11 atomes de carbone ;

   Où les pourcentages indiqués se rapportant dans chaque cas à la quantité totale des monomères formant le composant II.

2. Feuille selon la revendication 1, **caractérisée en ce que** le rapport des composants I et II se situe dans la plage de I : II = 10 : 90 à I : II = 95 : 5.

3. Feuille selon la revendication 1 ou 2, **caractérisée en ce que** le stabilisateur d'U.V. est choisi parmi les 2-hydroxybenzotriazols, les triazines ou des mélanges de ceux-ci.

**4.** Feuille selon l'une quelconque ou plusieurs des revendications 1 à 3, **caractérisée en ce que** la concentration de l'agent ignifugeant va de 0,5 à 30,0 % en poids, de préférence de 1,0 à 20,0 % en poids, par rapport au poids du thermoplastique cristallisable.

**5.** Feuille selon l'une quelconque ou plusieurs des revendications 1 à 4, **caractérisée en ce que** l'ignifugeant contient des composés phosphoriques organiques, de préférence des acides carboxyphosphiniques et leurs anhydrides.

**6.** Feuille selon l'une quelconque ou plusieurs des revendications 1 à 5, **caractérisée en ce qu'**un stabilisateur d'hydrolyse est présent sous forme de stabilisateurs phénoliques, stéarates alcalins ou alcalino-terreux, et/ou carbonates alcalins / alcalino-terreux en une quantité allant de 0,01 à 1,0 % en poids, et de préférence sous forme de stabilisateurs phénoliques en une quantité allant de 0,05 % à 0,6 % en poids, en particulier de 0,15 à 0,3 % en poids, et avec une masse molaire de plus de 500 g/mol.

**7.** Feuille selon la revendication 6, **caractérisée en ce que** le stabilisateur d'hydrolyse est le tétrakis-3-(3,5-di-tert.-butyl-4-hydroxyphényl)-proprionate de pentaérythrityle et/ou le 1,3,5-triméthyl-2,4,6-tris(3,5-di-tert.-butyl-4-hydroxybenzyl)benzène.

**8.** Feuille selon l'une quelconque ou plusieurs des revendications 1 à 7, **caractérisée en ce que** la couche de recouvrement présente une épaisseur de 0,2 à 6 µm.

**9.** Feuille selon l'une quelconque ou plusieurs des revendications 1 à 8, **caractérisée en ce qu'**elle comporte deux couches et **en ce qu'**elle se compose de la couche de base et de la couche de recouvrement.

**10.** Feuille selon l'une quelconque ou plusieurs des revendications 1 à 9, **caractérisée en ce qu'**elle comporte trois couches et **en ce qu'**elle se compose de la couche de base et de respectivement une couche de recouvrement sur les deux faces de la couche de base.

**11.** Feuille selon la revendication 9 ou 10, **caractérisée en ce qu'**une couche de recouvrement contient une charge inorganique.

**12.** Feuille selon l'une quelconque ou plusieurs des revendications 1 à 11, **caractérisée en ce qu'**elle est métallisée sur au moins une surface ou **en ce qu'**elle est revêtue de $SiO_x$, $Al_xO_y$, d'alcool éthylvinylique, de PVDC, de verre soluble, de polyester hydrophile, d'acétate de vinyle, d'acétate de polyvinyle, de polyuréthane, de sels d'acides gras d'alcalins ou d'alcalino-terreux, de copolymère de butadiène, d'acide (méth)acrylique ou ses esters ou silicones.

**13.** Procédé de fabrication de la feuille selon la revendication 1, dans lequel les matières fondues polyester sont amenées, en fonction des compositions des couches de recouvrement et de base, à une buse multicouche, extrudées à partir de la buse sur un rouleau de refroidissement et où la préfeuille ainsi obtenue est ensuite étirée biaxialement et fixée à chaud, la ou les matières fondues polyester pour la couche de base et/ou la ou les couches de recouvrement contenant au moins un stabilisateur d'U.V. et/ou au moins un agent ignifugeant et les matières fondues polymères pour la ou les couches de recouvrement contenant un mélange et/ou un blend de deux composants I et II, le composant I étant un homopolymère de polyéthylène téréphtalate ou un copolymère de polyéthylène téréphtalate ou un mélange d'homopolymères ou de copolymères de polyéthylène téréphtalate et le composant II étant un polymère, qui contient au moins un groupe sulfonate.

**14.** Utilisation d'une feuille selon l'une quelconque ou plusieurs des revendications 1 à 12, à titre d'habillage intérieur, comme à titre d'affichage, pour les panneaux, pour les verres protecteurs, dans le secteur de l'éclairage, dans l'agencement des magasins et des étals, à titre d'article publicitaire, de produit de laminage, pour les serres, les toitures, les habillages externes, les couvertures, dans le secteur du bâtiment, comme profilé publicitaire lumineux, comme toiles d'ombrage, ou dans les applications électriques.

**15.** Utilisation de la feuille selon l'une quelconque ou plusieurs des revendications 1 à 12, à titre de feuille imprimable.

**16.** Utilisation de la feuille selon l'une quelconque ou plusieurs des revendications 1 à 12, à titre d'étiquette.

**17.** Utilisation de la feuille selon l'une quelconque ou plusieurs des revendications 1 à 12, à titre de feuille de séparation pour la fabrication de semi-finis en plastiques renforcés de fibres de verre.

**18.** Utilisation de la feuille selon l'une quelconque ou plusieurs des revendications 1 à 12, à titre de feuille grainée.

**19.** Utilisation de la feuille selon l'une quelconque ou plusieurs des revendications 1 à 12, à titre d'étiquette moulée.